# EUROPEAN PATENT SPECIFICATION

(11) **EP 0 480 889 B1**
(45) Date of publication and mention of the grant of the patent: **02.08.1995**
(21) Application number: 91830421.3
(22) Date of filing: 09.10.1991
(51) Int. Cl.: B44F 1/06, C03C 17/34

(54) **Method for making patterned plate glass**
Verfahren zur Herstellung von gemustertem Flachglas
Procédé pour la fabrication de verre plat dessiné

(30) Priority: 10.10.1990 IT 2169290; 03.01.1991 IT MI910002
(43) Date of publication of application: 15.04.1992
(73) Proprietor: AXIVETRO S.r.l., I-22063 Cantu' (Como) (IT)
(72) Inventor: Martelli, Giuliano, I-22063 Cantu' (Como) (IT)
(74) Representative: Cicogna, Franco

(56) References cited:
- DE-A- 3 838 930
- WORLD PATENTS INDEX Week 7842, Derwent Publications Ltd, London, GB; AN 78-75458A; & JP-A-53 105 522 (DAINIPPON PRINTING KK.) 13 September 1978
- WORLD PATENTS INDEX Week 7913, Derwent Publications Ltd, London,GB; AN 79-24443B; & JP-A-54 022216 (NISHIMURA) 20 February 1979.
- WORLD PATENTS INDEX LATEST Week 8425, Derwent Publications Ltd., London, GB; AN 84-156237; & JP-A-59 083962 (KAMAYA KAGAKU KOGYO) 15 May 1984.

## Description

### BACKGROUND OF THE INVENTION

The present invention relates to a method for making plate glass including decorating patterns, which can be made in several different colours.

As is known, glass plates can be advantageously used for making windows, room separating walls, doors, furniture piece doors and the like.

These glass plates are usually made starting from either a clear or a colored glass which glass can be processed, if required, on one of its surfaces, or on both its surfaces, so as to provide these surfaces with a desired aspect, for example a polished or ground aspect.

Prior decorated glass plates, however, do not provide a fully satisfactory decorative effect.

Colored glass plates are also known which, in addition to providing a poor chromatic effect, also have a comparatively high making cost.

In fact, these glass plates are usually provided with patterns by means of manual operations, or by using patterned templates, or by printing methods, usually of a screen-printing type.

The decorative effect provided by these glass plates, as stated, is poor either because of a rather inaccurate pattern, or because of chromatic discordances.

Moreover, the decorative patterns on these prior glass plates are susceptible to a quick wear both because of atmospheric agents and because of usual cleaning operations carried out thereon.

The document DE-A-3 838 930 discloses a method for making plate glass articles substantially according to the preamble of the main Claim.

### SUMMARY OF THE INVENTION

Accordingly, the aim of the present invention is to overcome the above mentioned drawbacks, by providing a method for making decorated glass plates which allows to transfer, on the glass plates, complex patterns, such as patterns simulating the grains of wood, the veins of a marble and the like.

Within the scope of the above mentioned aim, a main object of the present invention is to provide such a method for making decorated glass plates which is very reliable and simple from an operative standpoint.

Yet another object of the present invention is to provide such a method for making decorated glass plates which allows to make glass plate articles of manufacture having a very high decorative value and which are not negatively affected by wear phenomena or the like.

According to one aspect of the present invention, the above mentioned aim and objects, as well as yet other objects, which will become more apparent hereinafter, are achieved by a method for making patterned plate glass articles, according to the characterizing portion of the main claim.

Advantageously, the used clear paint comprises an epoxy resin.

### BRIEF DESCRIPTION OF THE DRAWINGS

Further characteristics and advantages of the method according to the present invention will become more apparent from the following detailed disclosure of a preferred embodiment thereof, which is illustrated, by way of an indicative but not limitative example, in the figures of the accompanying drawing, where:

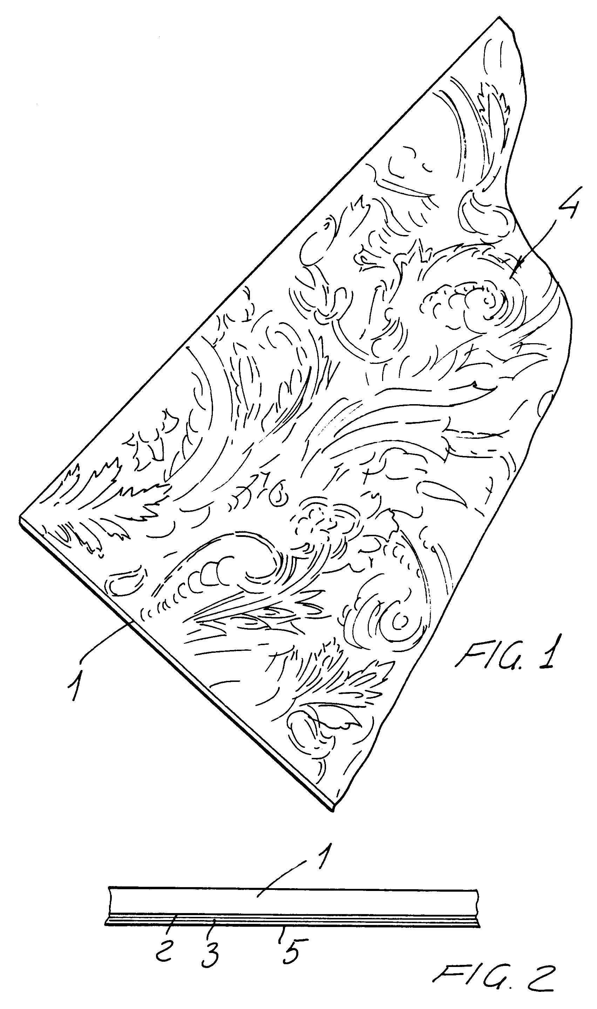

Figure 1 shows a generic portion of a decorated glass plate made by the method according to the present invention;
Figure 2 is a cross-sectional view of the glass plate shown in figure 1;

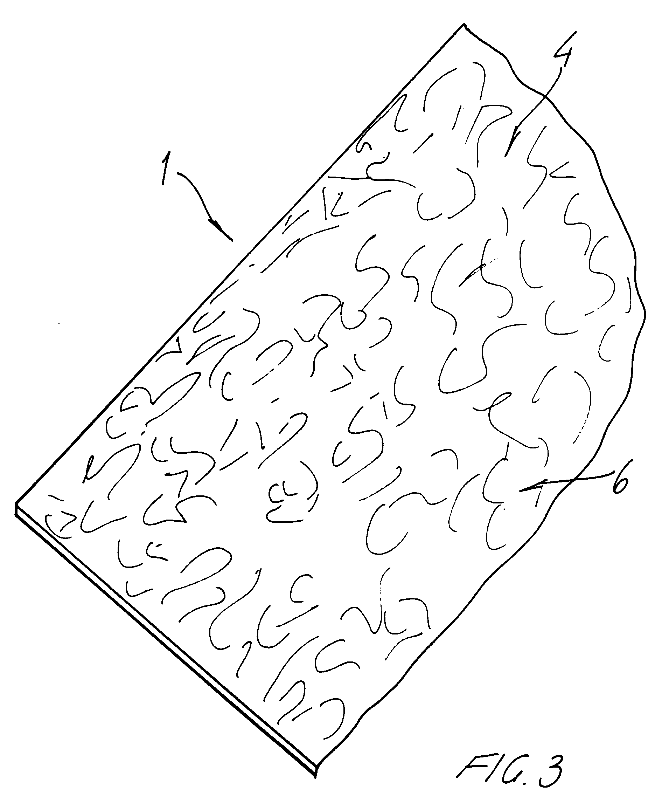

Figure 3 shows a portion of a further glass plate which has been processed so as to provide a glass panel coated by briar;
   and

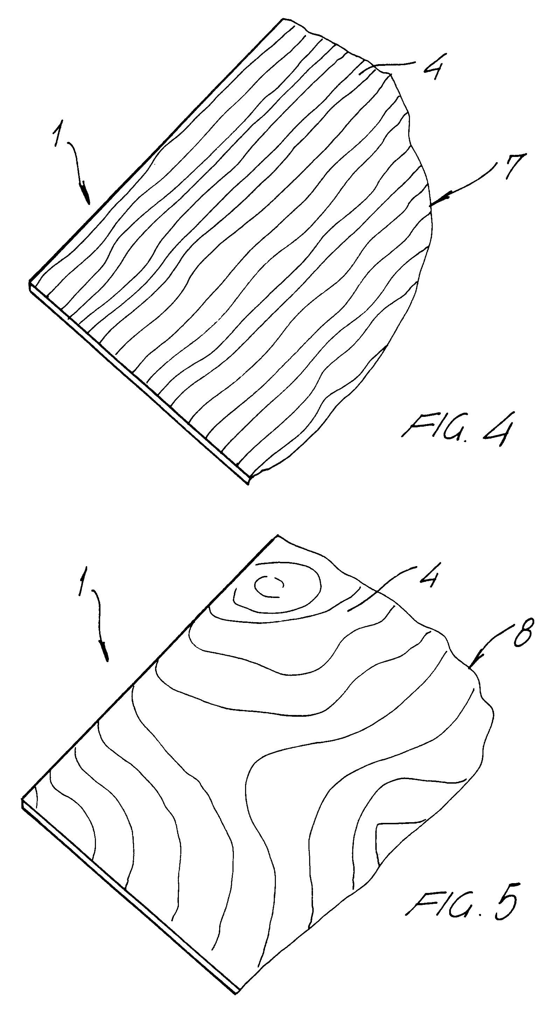

Figures 4 and 5 show glass plates which have been processed by the method according to the present invention so as to provide the glass plate with a marble or granite aspect and a wood veneer aspect respectively.

### DESCRIPTION OF THE PREFERRED EMBODIMENT

With reference to the figures of the accompanying drawings, the method for making decorated glass plates according to the invention, comprises the step of providing a conventional glass plate 1 which, if desired, can be of a tempered or layered type, either clear or colored.

According to the invention, on a side of this glass plate there is applied a thin layer 2 of a clear paint, advantageously a clear epoxy resin.

This epoxy resin, which will have any suitable formulation, is coated on the glass plate 1 by any known coating methods, such as a spraying or a spreading method.

In this connection, it should be apparent that the glass plate 1 may have any desired suitable thickness and may be produced according to conventional methods for making glass plates.

Then, in a further step of the method of the invention, on the glass plate 1 there is applied, by any conventional transfer process, a supporting element 3, bearing a pattern thereon, and generally indicated at 4, the pattern advantageously reproducing the aesthetic aspect of a wood or briar panel, of a natural stone plate, of the type which is generally used for decorative purposes.

It should be apparent that the pattern can comprise chromatic arrangements of different colours.

Then, in a further step of the method according to the invention, on the patterned supporting member a covering and protecting film 5 is applied, said film 5 having any desired colours and being specifically designed to provide a protecting layer for the patterned supporting member, while providing the glass plate with a background colour.

In particular, as stated, the pattern applied by a transfer method on the glass plate may reproduce, depending on the use provided for the glass plate, the surface aspect of a briar layer 6, or of a marble or granite layer 7, or of a wood veneer 8.

## Claims

1. A method for making patterned plate glass articles for making windows, room separating walls, doors and furniture piece doors, said plate glass articles having complex patterns simulating the grains of wood and the veins of marble , comprising the steps of providing a glass plate, either of a clear or colored type (1), applying on said plate (1) a clear paint (2), applying on said clear paint, by a transfer process, a desired pattern (4) and applying on said pattern a coating protecting film (5), characterized in that said clear paint comprises an epoxy resin and that said epoxy resin provides an epoxy resin film colored in different colors and designed to operate both as a protective layer for said pattern and as a background colored film for said glass plate (1).

2. A method according to claim 1, characterized in that said epoxy resin is coated on said plate by a spraying process.

3. A method according to claim 2, characterized in that said epoxy resin is coated on said glass plate by a spreading process.

## Patentansprüche

1. Ein Verfahren zum Herstellen flacher Glaswaren mit Mustern, um Fenster, Trennwände für Räume, Türen und Türen für Möbelstücke herzustellen, wobei diese flachen Glaswaren komplexe Muster besitzen, die die Körnung von Holz und die Maserung von Marmor nachahmen, umfassend die Schritte des Bereitstellens einer Glastafel, entweder vom klaren, oder vom gefärbten Typ (1), des Auftragens eines klaren Anstriches (2) auf diese Tafel (1), des Aufbringens mittels eines Abziehbilderverfahrens eines gewünschten Musters (4) auf diesen klaren Anstrich und des Aufbringens eines beschichtenden Schutzfilmes (5) auf dieses Muster, dadurch gekennzeichnet, daß dieser klare Anstrich ein Epoxidharz umfaßt und daß dieses Epoxidharz einen Film aus Epoxidharz bereitstellt, der mehrfarbig und so entworfen ist, sowohl als Schutzschicht für dieses Muster, als auch als gefärbter Hintergrundfilm für diese Glastafel (1) zu wirken.

2. Ein Verfahren nach Anspruch 1, dadurch gekennzeichnet, daß dieses Epoxidharz auf diese Tafel mittels eines Sprayverfahrens aufgetragen wird.

3. Ein Verfahren nach Anspruch 2, dadurch gekennzeichnet, daß dieses Epoxidharz auf diese Glastafel mittels eines Streichverfahrens aufgetragen wird.

## Revendications

1. Un procédé pour produire des articles en verre plats à dessins pour fabriquer des fenêtres, des cloisons, des portes et des portes de meubles, lesdits articles plats en verre ayant des dessins complexes simulant le fil de bois et les madrures du marbre, comprenant les étapes de mettre en oeuvre un pan de verre du type ou bien clair ou bien coloré (1), d'appliquer un peinture claire (2) sur ledit pan de verre (1), d'appliquer au moyen d'une décalcomanie un dessin désiré (4) sur ladite peinture claire et d'appliquer sur ledit dessin une couche (5) protectrice recouvrante, caractérisé en ce que ladite peinture claire comprend une résine époxy et en ce que ladite résine époxy donne une couche en résine époxy à plusieurs couleurs et conçue de manière à opérer à la fois comme couche protectrice dudit dessin et en tant que couche de fond colorée pour ledit pan de verre (1).

2. Un procédé selon la revendication 1, caractérisé en ce que ladite résine époxy est portée sur ledit pan au moyen d'un procédé de pulverisation.

3. Un procédé selon la revendication 2, caractérisé en ce que ladite résine époxy est portée sur ledit pan de verre au moyen d'un procédé de peinture.
